# EUROPÄISCHE PATENTSCHRIFT

(11) **EP 1 412 214 B1**
(45) Veröffentlichungstag und Bekanntmachung des Hinweises auf die Patenterteilung: **13.09.2006**
(21) Anmeldenummer: 02791485.2
(22) Anmeldetag: 31.07.2002
(51) Int. Cl.: B60J 10/08, B62D 25/04, B62D 27/02

(54) **DICHTUNG AN EINEM ÖFFNUNGSABSCHLUSS EINER KRAFTFAHRZEUGKAROSSERIE, INSBESONDERE IN SPACE-FRAME-BAUWEISE**
SEALING FOR AN OPENING CLOSURE ON A CAR BODY, ESPECIALLY IN SPACE-FRAME DESIGN
JOINT SUR UNE OBTURATION D'OUVERTURE D'UNE CARROSSERIE DE VEHICULE AUTOMOBILE, NOTAMMENT DE TYPE CHASSIS TUBULAIRE NON CARROSSE

(30) Priorität: 01.08.2001 DE 10137699
(43) Veröffentlichungstag der Anmeldung: 28.04.2004
(73) Patentinhaber: ThyssenKrupp Steel AG, 47166 Duisburg (DE)
(72) Erfinder: PATBERG, Lothar, 52074 Aachen (DE)
(74) Vertreter: Knauf, Rudolf
(86) Internationale Anmeldenummer: PCT/EP2002/008512
(87) Internationale Veröffentlichungsnummer: WO 2003/011624

(56) Entgegenhaltungen:
- DE-A- 4 314 123
- US-A- 5 356 194
- US-A- 5 820 198

## Beschreibung

Die Erfindung betrifft einen Profilrahmen mit einer vom Profilrahmen eingefaßten Dichtung, der mit einer Tür oder Klappe verschließbaren Öffnungsabschluß einer Kraftfahrzeugkarosserie bildet (US 5820198).

Bei einer Kraftfahrzeugkarosserie in Schalenbauweise ist die Dichtung auf den Verbindungsflanschen der den Profilrahmen bildenden Schalen aufgesteckt. Die Flansche sind ausreichend steif mit dem Profilrahmen verbunden, um die über die Dichtung von der verschlossenen Tür oder Klappe ausgeübten Kräfte aufnehmen zu können.

Werden anstelle von zusammengeschweißten Schalen für die Profilrahmen stranggegossene Hohlprofile verwendet, dann sind an diesen Profilen den Flanschen entsprechende Stege angeformt, die eine ausreichende Steifigkeit haben, um die die von der verschlossenen Tür auf sie über die aufgesteckte Dichtung ausgeübten Kräfte aufnehmen zu können.

Bei der Space-Frame-Bauweise, bei der als Profilrahmen aus Blechplatinen längsnahtgeschweißte Hohlprofile verwendet werden, fehlen solche Flansche oder Stege für die Anbringung von Dichtungen.

Der Erfindung liegt die Aufgabe zugrunde, eine für den Öffnungsabschluß von Türen oder Klappen geeignete Dichtung an dem den Öffnungsabschluß einfassenden Profilrahmen vor allem für in Space-Frame-Bauweise hergestellte Kraftfahrzeugkarosserien zu schaffen.

Diese Aufgabe wird erfindungsgemäß mit einem Profilrahmen, der eingangs genannten Art dadurch gelöst, daß die Dichtung mit einer Lippe zwischen dem flansch- und steglos ausgebildeten Profilrahmen und einem den Profilrahmen außenseitig verkleidenden und an ihm befestigten Abdeckblech eingeklemmt und rückseitig an dem Profilrahmen zur Aufnahme der vorderseitig auf sie von der geschlossenen Tür oder Klappe einwirkenden Schließkraft abgestützt ist.

Bei der Erfindung werden keine das Gewicht erhöhenden Teile für die Befestigung der Dichtung und ihre Abstützung benötigt. Das Abdeckblech ist in der Regel ohnehin für den Profilrahmen vorgesehen. Da es nur Haltefunktion und keine Stützfunktion hat, braucht es für die Haltefunktion nicht stärker als für die Abdeckfunktion ausgelegt zu sein. Der Profilrahmen kann die auf ihn von der Tür/Klappe ausgeübten Kräfte problemlos aufnehmen, da er üblicherweise Teil der Tragstruktur der Karosserie ist und deshalb schon für wesentlich größere Kräfte ausgelegt ist.

Für eine gute Abstützung der Dichtung kann der Profilrahmen entsprechend profiliert sein, insbesondere eine Mulde aufweisen.

Das erfindungsgemäße Prinzip der Abstützung und Halterung der Dichtung ist im Bereich des gerade oder gebogen verlaufenden Profilrahmens unproblematisch. Aber auch in den Problemzonen, wo der aus Hohlprofilen gefügte Profilrahmen scharfe Ecken bildet, kann die Dichtung durch Klemmung gehalten und abgestützt werden. Dafür ist nach einer Ausgestaltung der Erfindung vorgesehen, daß bei einem aus Hohlprofilen unter Bildung scharfer Ecken gefügten Profilrahmen an dem Profilrahmen dessen Ecken abrundende, dem Profil des Profilrahmens entsprechende Deckbleche befestigt sind. Diese Deckbleche können zusätzlich zu ihrer Funktion als Halter für die Dichtung auch als Versteifungsblech an den Ecken der gefügten Hohlprofile dienen.

Die Anbindung der Abdeckbleche zur Halterung der Dichtung und/oder der Deckbleche an den Ecken kann durch die üblichen Verbindungstechniken, wie Klebung, Schweißung etc. erfolgen.

Im folgenden wird die Erfindung anhand einer ein Ausführungsbeispiel darstellenden Zeichnung näher erläutert. Im einzelnen zeigen:
- Fig. 1: zwei Dichtungen an einem Profilrahmen von zwei Öffnungsabschlüssen für zwei Türen im Querschnitt,
- Fig. 2: zwei Profilrahmen aus zwei unter Bildung scharfer Ecken gefügter Hohlprofile im Ausschnitt und in perspektivischer Darstellung,

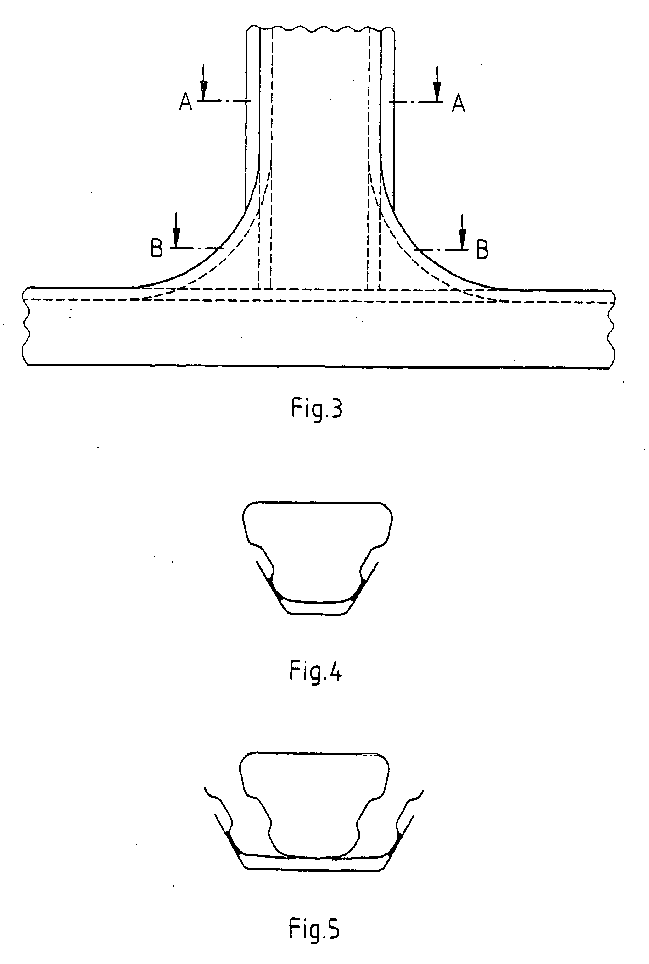

- Fig. 3: die Profilrahmen gemäß Fig. 2 in Ansicht,
- Fig. 4: die Profilrahmen gemäß Fig. 3 im Querschnitt nach Linie A-A der Fig. 3 und
- Fig. 5: die Profilrahmen gemäß Fig. 3 im Schnitt nach der Linie B-B der Fig. 3.

Die Figuren zeigen von einer Tragstruktur eines Kraftfahrzeuges in Space-Frame-Bauweise im Ausschnitt eine B-Säule 1 und einen Türschweller 2 als Teile einer Tragstruktur. Die B-Säule 1 und der Türschweller 2 bilden Teile von zwei Profilrahmen für Öffnungsabschlüsse von Türen T₁, T₂. Sie bestehen jeweils aus Hohlprofilen, die aus Blechplatinen geformt und längsnahtgeschweißt und durch Innenhochdruckumformen in das gewünschte Profil gebracht sind. Eine Besonderheit an diesem Profil ist, daß es längs verlaufende muldenförmige Profilierungen 3, 4, 5, 6, aufweist.

Die B-Säule 1 und der Türschweller 2 sind unter Bildung scharfer Ecken gefügt, und zwar verschweißt. In den scharfen Ecken sitzen jeweils die Ecken abrundende Deckbleche 7, 8, die in ihrem Profil dem Profil der B-Säule 1 und dem Türschweller 2 angepaßt sind, so daß die muldenförmigen Profilierungen 3, 4, 5, 6 sich über entsprechende Profilierungen 9, 10 in den Deckblechen 7, 8 fortsetzen.

Diese Deckbleche 7, 8 können durch Klebung oder Punktschweißung angefügt sein.

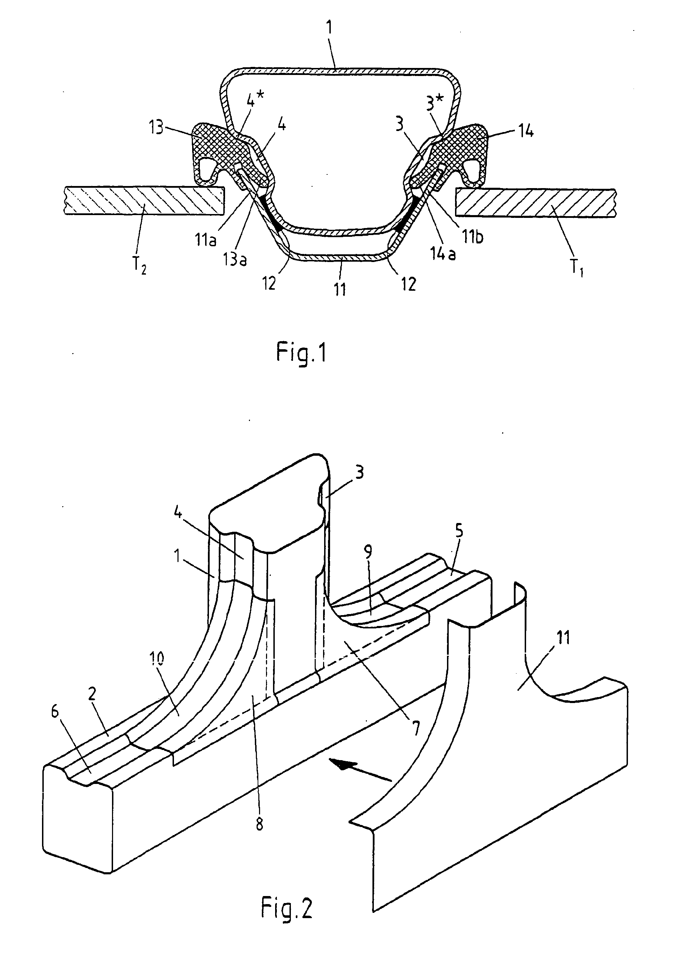

Der Profilrahmen 1, 2 ist außenseitig mit einem Abdeckblech 11, auch Beplankung bezeichnet, verkleidet, das im wesentlichen als U-Profil ausgebildet ist. Auch dieses Abdeckblech 11 ist mit üblichen Fügetechniken, insbesondere einer Klebeverbindung 12, am Profilrahmen 1, 2 befestigt. Wie besonders deutlich aus Fig. 1 zu entnehmen ist, erstreckt das U-förmige Abdeckblech 11 sich mit seinen Schenkeln 11a, 11b bis in den Bereich der muldenförmigen Profilierungen 3, 4 hinein. Auf diese freien Schenkel 11a, 11b ist eine profilierte, mit einer Stahleinlage versteifte Dichtung 13, 14 aufgesteckt, wobei eine Lippe 13a, 14a der Dichtung 13, 14 zwischen dem freien Schenkel 11a, 11b und der muldenförmigen Profilierung 3, 4 eingeklemmt ist. Das Profil der Dichtung 13, 14 und das Profil der muldenförmigen Profilierung 3, 4 sind derart aufeinander abgestimmt, daß sich die Dichtung 13, 14 rückseitig an der Flanke 3*, 4* der muldenförmigen Profilierung 3, 4 abstützt. Wenn also die Tür T₁, T₂ verschlossen ist und die Schließkraft der Tür T₁, T₂ auf die Dichtung 13, 14 einwirkt, stützt diese sich an der steifen B-Säule 1 des Profilrahmens ab.

Bei der Erfindung werden also ohnehin vorhandene Bauteile, und zwar das für die Verkleidung des Profilrahmens vorgesehene Abdeckblech 11 (Beplankung) und der steife Profilrahmen 1, 2, für die Befestigung und Abstützung der Dichtung 13, 14 an den Öffnungsabschlüssen für Türen T₁, T₂ genutzt. Das bedeutet, daß keine Sonderprofile für die Space-Frame-Bauweise benötigt werden und deshalb auch kein zusätzliches Gewicht entsteht. Die Montage ist denkbar einfach, da die profilierten Dichtungen nur aufgesteckt sein brauchen. Sie können nach Art einer Schnappverbindung gehalten werden.

## Patentansprüche

1. Profilrahmen mit einen vom Profilrahmen (1, 2) eingefassten Dichtung (13, 14), der mit einer Tür (T₁, T₂) oder Klappe verschliessbaren Öffnungsabschluss einer Kraftfahrzeug-Karosserie bildet, **dadurch gekennzeichnet, dass** die Dichtung (13, 14) mit einer Lippe (13a, 14a) zwischen dem flansch- und steglos ausgebildeten Profilrahmen (1, 2) und einem den Profilrahmen (1,2) aussenseitig verkleidenden und an ihm befestigten Abdeckblech (11) eingeklemmt und rückseitig an dem Profilrahmen (1, 2) zur Aufnahme der vorderseitig auf sie von der geschlossenen Tür (T₁, T₂) oder Klappe einwirkenden Schließkraft abgestützt ist.

2. Profilrahmen nach Anspruch 1, **dadurch gekennzeichnet, dass** der Profilrahmen (1, 2) im Bereich der Abstützung der Dichtung (13, 14) muldenförmig profiliert ist.

3. Profilrahmen nach Patentanspruch 1 oder 2, **dadurch gekennzeichnet, dass** bei einem aus Hohlprofilen unter Bildung scharfer Ecken gefügten Profilrahmen (13, 14) an dem Profilrahmen (13, 14) die Ecken abrundendende, dem Profil des Profilrahmens (1, 2) entsprechende Deckbleche (11) befestigt sind.

## Claims

1. Profiled frame with a seal (13, 14) surrounded by the profiled frame (1, 2) which forms opening closure of a car body which can be closed by a door (T₁, T₂) or flap, **characterized in that** the seal (13, 14) with a lip (13a, 14a) is wedged between the profiled frame (1, 2) constructed without flanges or bars and a cover sheet (11) lining the profiled frame (1, 2) on the outside and secured thereto, the back being supported on the profiled frame (1, 2) to absorb the closing force exerted on its front by the closed door (T₁, T₂) or flap.

2. Profiled frame according to Claim 1, **characterized in that** the profiled frame (1, 2) is profiled in a trough shape in the vicinity of the support of the seal (13, 14).

3. Profiled frame according to Claim 1 or 2, **characterized in that** regarding a profiled frame (13, 14), consisting of hollow sections which form sharp corners, cover sheets (11) corresponding to the profile of the profiled frame (1, 2) and rounding off the corners are secured to the profiled frame (13, 14).

## Revendications

1. Cadre profilé avec un joint (13, 14) bordé par le cadre profilé (1, 2), qui forme une finition d'ouverture pouvant être fermée par une porte (T₁, T₂) ou un volet, de la carrosserie d'un véhicule automobile, **caractérisé en ce que** le joint (13, 14) est coincé avec une lèvre (13a, 14a) entre le cadre profilé (1, 2) formé sans âme ni rebord, et une tôle de couverture (11) habillant la face externe du cadre profilé (1, 2) et fixée à celui-ci, et est soutenu au dos par le cadre profilé (1, 2) pour absorber la force de fermeture exercée sur sa face frontale par la porte (T₁, T₂) ou le volet fermé.

2. Cadre profilé selon la revendication 1, **caractérisé en ce que** le cadre profilé (1, 2) est profilé en creux dans la région de l'appui du joint (13, 14).

3. Cadre profilé selon la revendication 1 ou 2, **caractérisé en ce que** des tôles de couverture (11) correspondant au profilé du cadre profilé (1, 2), arrondissant les angles, sont fixées au cadre profilé (1, 2), pour un cadre profilé (1, 2) formés de profilés creux joints, avec formation d'angles aigus.
